# EUROPEAN PATENT APPLICATION

(11) **EP 4 693 701 A1**
(43) Date of publication of application: **11.02.2026**
(21) Application number: 25185891.6
(22) Date of filing: 27.06.2025
(51) Int. Cl.: H01M 50/533, H01M 50/536, H01M 50/54, H01M 50/55, H01M 50/566

(54) **SECONDARY BATTERY AND METHOD FOR MANUFACTURING SAME**

(30) Priority: 06.08.2024 KR 20240104370
(71) Applicant: SAMSUNG SDI CO., LTD., Yongin-si, Gyeonggi-do 17084 (KR)
(72) Inventor: Kim, Seoyoung, Yongin-si 17084 (KR); Yoo, Wheesang, Yongin-si 17084 (KR)
(74) Representative: Marks & Clerk LLP

(57) **Abstract**

A secondary battery includes an electrode assembly including a first electrode plate having at least one first electrode tab thereon, a second electrode plate having at least one second electrode tab thereon, and a separator between the first electrode plate and the second electrode plate, a current collector plate joined to the first electrode tab or the second electrode tab, and a fixing member on a surface of the current collector plate, the fixing member being connected to a portion of a surface of an end of the at least one first electrode tab or the at least one second electrode tab.

## Description

### BACKGROUND

### 1. Field

Embodiments relate to a secondary battery and a method for manufacturing the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The electrodes and the electrode terminals of the electrode assembly may be electrically connected to each other through a current collector plate. The current collector plate may electrically connect the electrodes and the electrode terminals through contact with the electrode tabs. The current collector plate may be in contact with the electrode tab by welding. At this time, impurities such as welding foreign matters may be formed by welding, and these impurities may cause defects inside the secondary battery.

The above information disclosed in this Background section is for enhancement of understanding of the background of the present disclosure, and therefore, it may contain information that does not constitute related (or prior) art.

### SUMMARY

Aspects of embodiments of the present disclosure provide a secondary battery with improved safety and a method for manufacturing the secondary battery.

Embodiments include a secondary battery, the secondary battery including an electrode assembly including a first electrode plate having at least one first electrode tab thereon, a second electrode plate having at least one second electrode tab thereon, and a separator between the first electrode plate and the second electrode plate, a current collector plate joined to the at least one first electrode tab or the at least one second electrode tab, and a fixing member on a surface of the current collector plate, the fixing member being connected to a portion of a surface of an end of the at least one first electrode tab or the at least one second electrode tab.

The first electrode plate may be a positive electrode plate and the second electrode plate may be a negative electrode plate.

The at least one first electrode tab or the at least one second electrode tab may be joined to the current collector plate by laser welding.

The at least one first electrode tab may be a pair of first electrode tabs on one side of the electrode assembly, and the at least one second electrode tab may be a pair of second electrode pads on the other side of the electrode assembly.

The fixing member may include an insulating material.

The fixing member may include any one of an organic solvent, a UV-curable paint, and an epoxy resin.

The current collector plate may include a welded portion where the at least one first electrode tab or the at least one second electrode tab is welded, and a protrusion portion connected to the welded portion, the protrusion portion protruding in a direction opposite to a direction in which the electrode assembly is positioned.

The at least one first electrode tab or the at least one second electrode tab may protrude outward from the current collector plate, and the end of the at least one first electrode tab or the at least one second electrode tab may be bent toward the welded portion of the current collector plate, resulting in a bent end.

The fixing member may cover at least a portion of a surface of the bent end of the at least one first electrode tab or the at least one second electrode tab and at least a portion of a surface of the welded portion.

The fixing member may cover at least a portion of a surface of the bent end of the at least one first electrode tab or the at least one second electrode tab and at least a portion of a surface of the welded portion.

A length of the fixing member may be less than or equal to a length of the bent end of the at least one first electrode tab or the at least one second electrode tab.

A width of the fixing member may be less than or equal to a width of the current collector plate.

A thickness of a portion of the fixing member on the surface of the current collector plate may be greater than a thickness of a portion of the fixing member on the surface of the bent end of the at least one first electrode tab or the at least one second electrode tab.

A thickness of a portion of the fixing member on the surface of the current collector may be equal to a sum of a thickness of a portion of the fixing member arranged on the surface of the bent end of the at least one first electrode tab or the at least one second electrode tab and a thickness of the bent end of the at least one first electrode tab or the at least one second electrode tab.

A height of the fixing member may be lower than or equal to an upper surface of the protrusion portion in a direction in which the protrusion portion protrudes.

Embodiments include a method for manufacturing a secondary battery, the method includes: providing an electrode assembly including a first electrode plate having a first electrode tab formed thereon, a second electrode plate having a second electrode tab formed thereon, and a separator; joining the first electrode tab or the second electrode tab to a current collector plate; bending an end of the first electrode tab or the second electrode tab protruding outward from the current collector plate toward a welded portion of the current collector plate; and arranging a fixing member on a surface of an end of the first electrode tab or the second electrode tab, the fixing member being bent toward the welded portion and on a surface of the welded portion.

The current collector plate may include a welded portion where the first electrode tab or the second electrode tab is welded, and a protrusion portion connected to the welded portion, the protrusion portion protruding in a direction opposite to a direction in which the electrode assembly is positioned, wherein joining of the first electrode tab or the second electrode tab to the current collector plate includes joining the first electrode tab or the second electrode tab to the welded portion.

Arranging the fixing member includes arranging the fixing member to cover at least a portion of the surface of the first electrode tab or the second electrode tab, the fixing member being bent toward the welded portion and at least a portion of the surface of the welded portion.

Arranging the fixing member may include forming the fixing member by applying and curing an organic solvent.

Arranging the fixing member may include forming the fixing member by applying a UV-curable paint, irradiating UV thereon, and curing the UV-curable paint.

Arranging the fixing member may include forming the fixing member by applying an epoxy resin and adding a hardener thereto.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of skill in the art by describing in detail example embodiments with reference to the attached drawings, in which:
FIG. 1 illustrates a perspective view showing an example of a secondary battery according to one or more embodiments of the present disclosure;
FIG. 2 illustrates a perspective view showing an example of a secondary battery in which a fixing member is arranged on a surface of an electrode tab and a surface of a current collector plate according to one or more embodiments of the present disclosure;
FIG. 3 illustrates a perspective view showing an example of an electrode assembly according to one or more embodiments of the present disclosure;
FIG. 4 illustrates a perspective view showing an example of a current collector plate according to one or more embodiments of the present disclosure;
FIG. 5 illustrates a perspective view showing a state in which an electrode tab of an electrode assembly according to one or more embodiments of the present disclosure is bent so as to be joined to a current collector plate;
FIG. 6 illustrates a perspective view showing a state in which an electrode tab of an electrode assembly according to one or more embodiments of the present disclosure is joined to a current collector plate;
FIG. 7 illustrates a perspective view showing a state in which an electrode tab of an electrode assembly according to one or more embodiments of the present disclosure, which is joined to the current collector plate and protrudes outward from the current collector plate, is bent;
FIG. 8 illustrates a perspective view showing a fixing member arranged on a surface of a bent electrode tab and a surface of a current collector plate according to one or more embodiments of the present disclosure;
FIG. 9 illustrates an enlarged perspective view of a region A of FIG. 8; and
FIG. 10 illustrates a flowchart showing a method for manufacturing a secondary battery according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

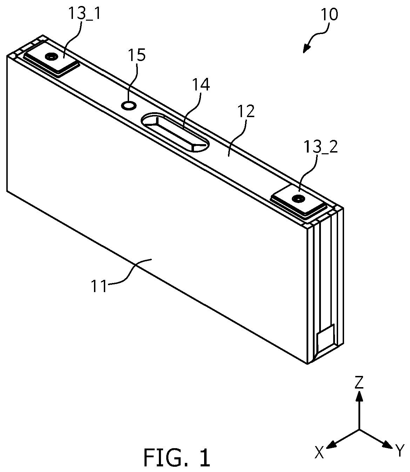

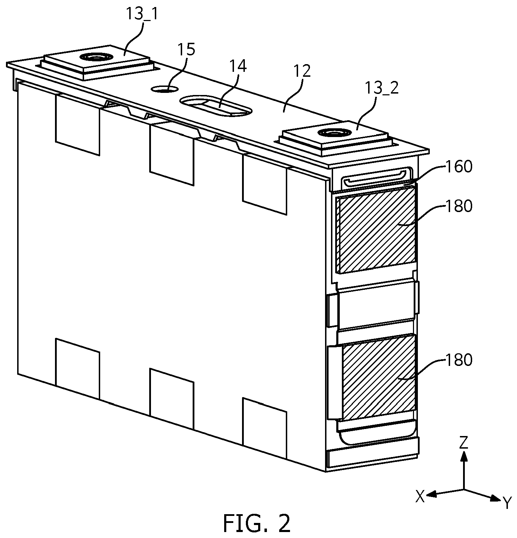

FIG. 1 illustrates a perspective view showing an example of a secondary battery 10 according to one or more embodiments of the present disclosure, and FIG. 2 illustrates a perspective view showing an example of a secondary battery 10 in which a fixing member 180 is arranged on a surface of an electrode tab and a surface of a current collector plate 160 according to one or more embodiments of the present disclosure.

Referring to FIG. 1, a secondary battery 10 may include at least one electrode assembly wound or stack with a separator, which is an insulator, interposed between a positive electrode and a negative electrode, a case 11 in which the electrode assembly is built (e.g., accommodated), and a cap plate 12 joined to one opened end of the case 11. The secondary battery 10 illustrated in FIG. 1 may be a prismatic secondary battery, but the secondary battery 10 according to the present disclosure may be various types of secondary batteries.

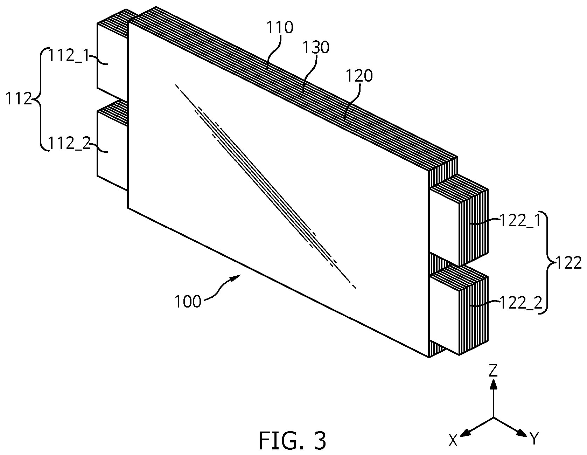

The electrode assembly may include a first electrode plate having at least one first electrode tab formed thereon, a second electrode plate having at least one second electrode tab formed thereon, and a separator interposed between the first electrode plate and the second electrode plate. This is described in more detail below with reference to FIG. 3.

The electrode assembly may have a positive electrode tab connected to one side of the positive electrode plate and a negative electrode tab connected to one side of the negative electrode plate. The positive electrode tab and the negative electrode tab may be electrically connected to a positive electrode terminal 13_1 and a negative electrode terminal 13_2 formed on the cap plate 12, respectively. The positive electrode terminal 13_1 and the negative electrode terminal 13_2 formed on the cap plate 12 may be electrically connected to a busbar.

The case 11 may form the overall outer appearance of the secondary battery 10 and may be made of a conductive metal, such as aluminum, aluminum alloy, stainless steel, iron or nickel-plated steel. In addition, the case 11 may provide a space in which the electrode assembly is accommodated.

According to one or more embodiments, the case 11 may be a prismatic case, and the secondary battery 10 may be a prismatic secondary battery. However, the secondary battery 10 may be any type of secondary battery, such as a prismatic type, a cylindrical type, and a pouch type.

The case 11 may include long side wall portions opposite to each other and short side wall portions opposite to each other. The long side wall portion may include a first long side wall portion and a second long side wall portion. The first long side wall portion and the second long side wall portion may be opposite to each other. The first long side wall portion and the second long side wall portion may be spaced apart to face each other. The short side wall portion may include a first short side wall portion and a second short side wall portion. The first short side wall portion and the second short side wall portion may be spaced apart to face each other. The area of each of the first short side wall portion and the second short side wall portion may be smaller than the area of each of the first long side wall portion and the second long side wall portion.

The cap plate 12 may be joined to the opened end of the case 11 to seal the case 11. Each of the case 11 and the cap plate 12 may be formed of a conductive material. According to one or more embodiments, the upper end of the case 11 may be opened, and the cap plate 12 may seal the opened upper end of the case 11.

The positive terminal 13_1 electrically connected to the positive electrode and the negative terminal 13_2 electrically connected to the negative electrode may be coupled to the case 12. For example, the positive and negative electrode terminals 13_1 and 13_2 may be installed to protrude outwardly through the cap plate 12.

Referring to FIG. 2, the positive electrode and the positive electrode terminal 13_1 may be electrically connected through the positive electrode current collector plate. The positive electrode current collector plate may electrically connect the positive electrode and the positive electrode terminal 13_1 through contact with the positive electrode uncoated portion or the positive electrode tab extending from or joined to the positive electrode uncoated portion.

The negative electrode and the negative electrode terminal 13_2 may be electrically connected through the negative electrode current collector plate. The negative electrode current collector plate may electrically connect the negative electrode and the negative electrode terminal 13_2 through contact with the negative electrode uncoated portion or the negative electrode tab extending from or joined to the negative electrode uncoated portion.

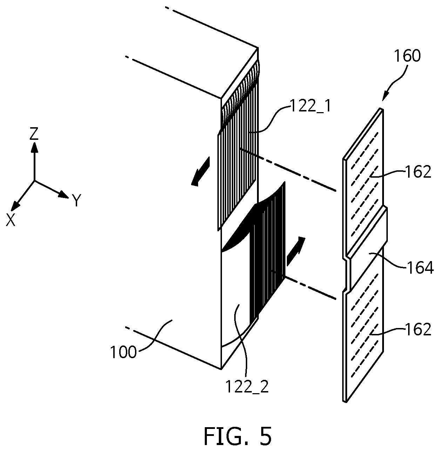

The current collector plate 160 may be joined to the first electrode tab or the second electrode tab of the electrode assembly. The fixing member 180 may be arranged on a portion of the surface of the current collector plate 160 joined to the first electrode tab or the second electrode tab and a portion of the surface of the end of the first electrode tab or the second electrode tab. This is described in detail below with reference to FIGS. 5 to 9.

A vent portion 14 may be formed on at least one surface of the secondary battery 10. As illustrated in FIG. 1, the vent portion 14 may be formed on the upper surface of the secondary battery 10, for example, on the cap plate 12. The vent portion 14 may be configured to be opened where an internal pressure exceeding a predefined threshold pressure occurs in the secondary battery 10.

The cap plate 12 may include an electrolyte injection port 15. For example, the electrolyte injection port 15 may be a hole formed in the cap plate 12. After the cap plate 12 is joined to the opening of the case 11 and then sealed, the electrolyte injection port 15 may be formed to inject an electrolyte into the case 11. The electrolyte injection port 15 may be sealed with a sealing member after the electrolyte is injected.

In addition, an insulation member may be installed between the electrode assembly 100 and the cap plate 12.

The secondary battery 10 may be a lithium secondary battery, a sodium secondary battery, etc. However, the secondary battery 10 may include any battery that is capable of repeatedly providing electricity through charging and discharging. In one or more embodiments, where the secondary battery 10 is a lithium secondary battery, the lithium battery cell may be used in electric vehicles (EVs) because the lithium battery cell has excellent lifespan characteristics and high rate characteristics. In addition, the lithium secondary battery may be used in EVs such as plug-in hybrid electric vehicles (PHEVs). The lithium secondary battery may be used in the fields that require a large amount of power storage. For example, the lithium secondary battery may be used in electric bicycles, power tools, and the like.

FIG. 3 illustrates a perspective view showing an example of an electrode assembly 100 according to one or more embodiments of the present disclosure.

Referring to FIG. 3, the electrode assembly 100 may include a first electrode plate 110, a second electrode plate 120, and a separator 130 provided between the first electrode plate 110 and the second electrode plate 120. Each of the first electrode plate 110, the second electrode plate 120, and the separator 130 may be formed in a thin plate shape or a film shape. The electrode assembly 100 may be formed by a structure in which the first electrode plate 110 and the second electrode plate 120 including a plurality of sheets are alternately stacked with the separator 130 therebetween. In addition, the electrode assembly 100 may be a Z-stack electrode assembly in which the first electrode plate 110 and the second electrode plate 120 are inserted into both sides of a separator, which is then bent into a Z-stack.

The first electrode plate 110 and the second electrode plate 120 are illustrated as having the same size in FIG. 3, but the two electrode plates 110,120 may have different sizes. The sizes of the first electrode plate 110 and the second electrode plate 120 are different from each other, and thus, an overhang may occur. For example, the area of the negative electrode plate may be larger than the area of the positive electrode plate.

FIG. 3 illustrates an example schematically showing the stacked structure of the stack-type electrode assembly 100, but the electrode assembly 100 may comprise any number or size of electrode plates. The outermost portion of the electrode assembly 100 may be finished with the first electrode plate 110 or the second electrode plate 120. The first electrode plate 110 may be formed as a positive electrode plate, and the second electrode plate 120 may be formed as a negative electrode plate, or vice versa.

According to one or more embodiments, where the first electrode plate 110 is formed as a positive electrode plate, a positive electrode active material layer mainly composed of lithium oxide may be formed by applying to opposite sides of a positive electrode current collector formed of a thin aluminum foil. In addition, positive electrode uncoated portions, which are areas where the positive electrode active material layer is not coated, may be formed at opposite ends of the positive electrode current collector.

A positive electrode plate for a rechargeable lithium battery may include a current collector and a positive electrode active material layer on the current collector. The positive electrode active material layer may include a positive electrode active material and may further include a binder and/or a conductive material(e.g., an electrically conductive material).

For example, the positive electrode plate may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change(e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

According to one or more embodiments, where the second electrode plate 120 is formed as a negative electrode plate, the second electrode plate 120 may be formed by applying a negative electrode current collector formed of a thin copper foil and a negative electrode active material layer including a carbon material as a main component to opposite sides of the negative electrode current collector. In addition, negative electrode uncoated areas, which are areas where the negative electrode active material layer is not coated, may be formed at opposite ends of the negative electrode current collector.

The negative electrode plate for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The negative current collector may include a copper foil, a nickel foil, a stainless steel foil, a titanium foil, a nickel foam, a copper foam, a polymer substrate coated with a conductive metal, or a combination thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The separator 130 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 130 may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be mixed in one coating layer, or a coating layer including an organic material and a coating layer including an inorganic material may be stacked.

According to one or more embodiments, the electrode assembly 100 may include a first electrode plate 110 having at least one first electrode tab 112 formed thereon, a second electrode plate 120 having at least one second electrode tab 122 formed thereon, and a separator 130 interposed between the first electrode plate 110 and the second electrode plate 120.

According to one or more embodiments, at least one first electrode tab 112 may be formed as a pair of first electrode tabs 112_1 and 112_2 on one side of the first electrode plate 110, and the at least one second electrode tab 122 may be formed as a pair of second electrode tabs 122_1 and 122_2 on one (e.g., opposite) side of the second electrode plate 120. The first electrode tab 112 and the second electrode tab 122 may be formed by welding the tabs to the uncoated portions of the first electrode plate 110 and the second electrode plate 120, or may be formed by punching out the uncoated portions of the first electrode plate 110 and the second electrode plate 120.

According to one or more embodiments, in the stacked state, the pair of first electrode tabs 112_1, 112_2 may be formed on one side of the electrode assembly 100 and the pair of second electrode tabs 122_1, 122_2 may be formed on the other side of the electrode assembly 100. Where the first electrode plate 110 is formed as a positive electrode plate, the pair of first electrode tabs 112_1, 112_2 may be formed as positive electrode tabs, and where the second electrode plate 120 is formed as a negative electrode plate, the pair of second electrode tabs 122_1, 122_2 may be formed as negative electrode tabs. In addition, where the polarities of the first electrode plate 110 and the second electrode plate 120 are reversed, it is apparent that the pair of first electrode tabs 112_1, 112_2 may be formed as negative tabs and the pair of second electrode tabs 122_1, 122_2 may be formed as positive tabs.

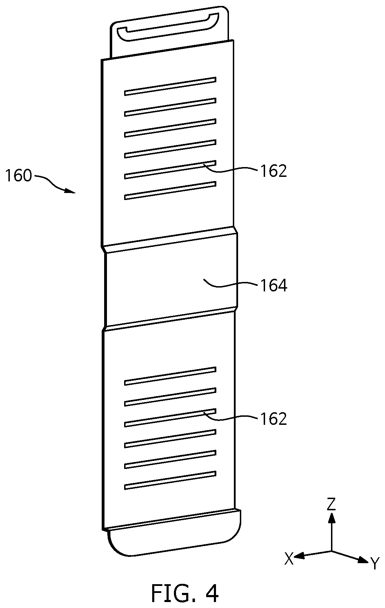

FIG. 4 illustrates a perspective view showing an example of the current collector plate according to one or more embodiments of the present disclosure.

Referring to FIG. 4, the current collector plate 160 may include a welded portion 162 to which the first electrode tab 112 (FIG. 3) or the second electrode tab 122 (FIG. 3) is welded, and a protrusion portion 164 connected to the welded portion 162 and which protrudes in a direction opposite to the direction in which the electrode assembly 100 is positioned.

In one or more embodiments, the current collector plate 160 may be electrically connected to the electrode assembly 100. Specifically, the first electrode tab 112 or the second electrode tab 122 of the electrode assembly 100 may be electrically connected to the front and back sides of the current collector plate 160.

According to one or more embodiments, the current collector plate 160 may include an electrically conductive material. For example, the current collector plate 160 may include copper (Cu). However, the material of the current collector plate 160 may be varied.

According to one or more embodiments, the width of the current collector plate (in the X-axis direction) 160 may be less than or equal to the thickness of the electrode assembly 100. Specifically, with respect to the Z-axis direction, the length of the current collector plate 160 may be less than or equal to the length of the electrode assembly 100.

According to one or more embodiments, the length of the current collector plate 160 (in the Z-axis direction) may be less than or equal to the height of the electrode assembly 100 (in the Z-axis direction). Specifically, with respect to the Z-axis direction, the length of the current collector plate 160 may be less than or equal to the length of the electrode assembly 100.

According to one or more embodiments, the welded portion 162 of the current collector plate 160 may be joined to the first electrode tab 112 or the second electrode tab 122 of the electrode assembly 100 by laser welding or ultrasonic welding. Accordingly, the current collector plate 160 may be joined to the first electrode tab 112 or the second electrode tab 122 of the electrode assembly 100 to represent a positive electrode or a negative electrode.

According to one or more embodiments, the protrusion portion 164 of the current collector plate 160 is positioned between the welded portions 162 and may be positioned in the center of the current collector plate 160. Other materials, such as insulating materials, may be arranged on the lower surface of the protrusion portion 164.

The size and shape of the current collector plate 160 may be varied.

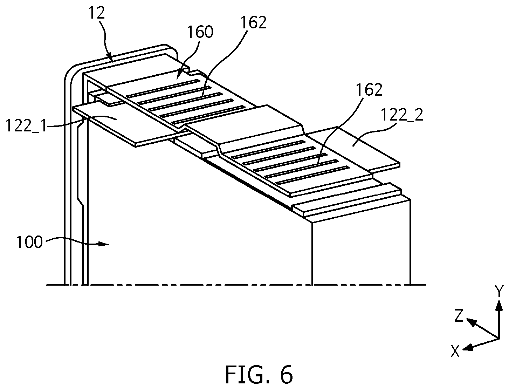

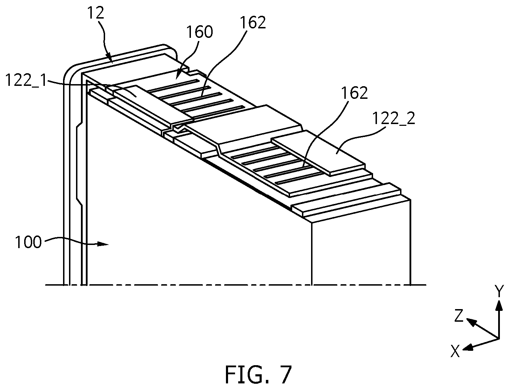

FIG. 5 illustrates a perspective view showing a state in which an electrode tab of an electrode assembly 100 according to one or more embodiments of the present disclosure is bent for joining to a current collector plate 160, FIG. 6 illustrates a perspective view showing a state in which the electrode tab of the electrode assembly 100 according to one or more embodiments of the present disclosure is joined to the current collector plate 160, and FIG. 7 illustrates a perspective view showing a state in which the electrode tab protruding outward from the current collector plate 160 is bent after joining the electrode tab of the electrode assembly 100 according to the embodiment of the present disclosure to the current collector plate 160.

For the convenience of description, the second electrode tab is used as a reference, and the first electrode tab may also be explained in the same way as the second electrode tab.

Referring to FIGS. 5 to 7, a pair of second electrode tabs 122_1, 122_2 may protrude on one side of the electrode assembly 100 and may be aligned. A current collector plate 160 may be welded to the second electrode tab 122, so that the second electrode tab 122 and the current collector plate 160 may be electrically connected to each other. At this time, the pair of second electrode tabs 122_1, 122_2 may be bent in different directions for welding the second electrode tab 122. Thereafter, the current collector plate 160 may be pressed against the bent surface of the pair of second electrode tabs 122_1, 122_2 and laser welding or ultrasonic welding may be performed thereon.

For example, among the pair of second electrode tabs 122_1, 122_2, the upper second electrode tab 122_1 may be bent to the left with reference to FIG. 5, and the lower second electrode tab 122_2 may be bent to the right. That is, the pair of electrode tabs 122_1, 122_2 of the electrode assembly 100 may be bent in opposite directions.

After pressing and bending the pair of second electrode tabs 122_1, 122_2 in opposite directions, the current collector plate 160 may be positioned on the upper side of the pair of second electrode tabs 122_1, 122_2 and a welded portion 162 may be welded using laser welding to electrically connect the second electrode tab 122 and the current collector plate 160.

After laser welding is completed, as illustrated in FIG. 6, the pair of second electrode tabs 122_1, 122_2 may protrude outward from the current collector plate 160, and as illustrated in FIG. 7, the ends of the pair of second electrode tabs 122_1, 122_2 may be bent toward the welded portion 162.

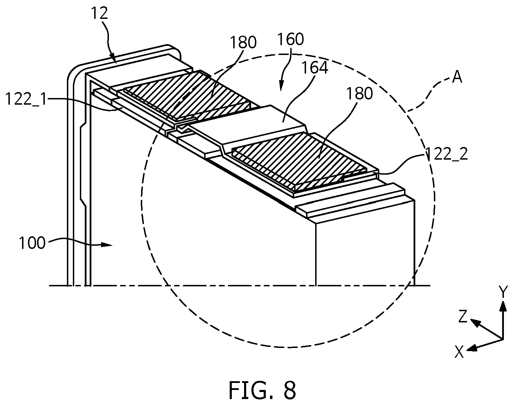

FIG. 8 illustrates a perspective view showing the fixing member 180 arranged on the surface of the bent electrode tab and the surface of the current collector plate 160 according to one or more embodiments of the present disclosure.

Referring to FIG. 8, the fixing member 180 may be arranged to cover at least a portion of the surface of the bent end of the second electrode tab 122 and at least a portion of the surface of the welded portion 162. For example, the fixing member 180 may be arranged to cover at least a portion of the surface of the bent end of the second electrode tab 122 and the entire surface of the welded portion 162. As another example, the fixing member 180 may be arranged to cover the entire surface of the bent end of the second electrode tab 122 and the entire surface of the welded portion 162.

According to one or more embodiments, the material of the fixing member 180 may include an insulating material. The insulating material may form an electrical barrier between the current collector plate 160 and the case 11 to prevent current flow and short circuit.

In relation to the electrical insulation properties described above, the material of the fixing member 180 may include any one of an organic solvent, a UV-curable paint, and an epoxy resin.

According to one or more embodiments, the organic solvent may be a non-reactive material that does not react with the electrolyte and has adhesive properties so as to impart adhesion. In addition, the organic solvent may be elastic to absorb impact in the case of being dropped and may have a high melting point to prevent deformation during the manufacturing process. For example, the organic solvent may include polypropylene (PP), polyethylene (PE), polytetrafluoroethylene (PTFE), ethylene-propylene diene monomer (EPDM), polyvinylidene fluoride (PVdF), acrylic, or rubber-based adhesives.

According to one or more embodiments, the composition of the fixing member 180 may be an organic material and may include a polymer or oligomer that is dissolved or dispersed in a solvent system. For example, the polymer or oligomer may include the group consisting of polymers and oligomers of cyclic olefins, epoxies, acrylics, silicones, styrenics, vinyl halides, vinyl esters, polyamides, polyimides, polysulfones, polyethersulfones, cyclic olefins, polyolefin rubbers, polyurethanes, ethylene-propylene rubbers, polyamide esters, polyimide esters, polyacetals, and polyvinyl butyral. The typical solvent system may vary depending on the choice of polymer or oligomer. The general content of the solid of the composition may be from about 1 wt% to about 60 wt%, for example, from about 3 wt% to about 40 wt%, based on 100 wt% of the total weight of the composition.

In one or more embodiments, the UV-curable paint is preferably a photocurable resin, but other types of UV-curable paint could be used. The UV-curable paint may be cured at low temperatures, have a fast curing speed, prevent contamination, and have electrical insulation properties.

According to one or more embodiments, the epoxy resin may be readily formed into a thermosetting material at room temperature, and a hardener may be added for curing. The hardener may include materials that readily react with the epoxy. The epoxy resin may be formed using three-dimensional thermosetting materials by mixing with a hardener.

By means of the material described above, the fixing member 180 may insulate between the current collector plate and the case and may absorb impact between the case and the current collector plate due to elasticity thereof. Due to this, deformation of the current collector plate due to impact may be blocked in advance, preventing damage to the electrode plate. In addition, the fixing member 180 may restrain welding foreign matters generated by welding the electrode tab and the current collector plate. Due to this, where the electrolyte is injected into the secondary battery, welding foreign matters move inside the secondary battery, but the fixing member 180 may restrain the welding foreign matters in advance, so that defects in the secondary battery, such as voltage drop, may be reduced. Accordingly, the safety of the secondary battery may be improved.

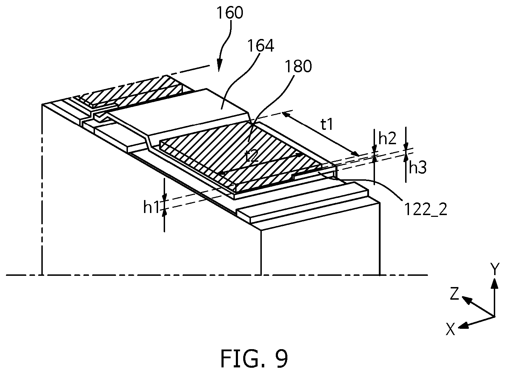

FIG. 9 illustrates an enlarged perspective view of a region A of FIG. 8.

Referring to FIG. 9, the length t1 of the fixing member 180 may be less than or equal to the length of the bent end of the second electrode tab 122_2. Specifically, with respect to the Z-axis direction, the length t1 of the fixing member 180 may be greater than the length of the welded portion (see 162 of FIG. 7) of the current collector plate 160 and less than or equal to the length of the bent end of the second electrode tab 122_2.

According to one or more embodiments, the width t2 of the fixing member 180 may be less than or equal to the width of the current collector plate 160. Specifically, the width t2 of the fixing member 180 may be greater than the length of the welded portion (see 162 of FIG. 7) of the current collector plate 160 in the X-axis direction and may be less than or equal to the length of the current collector plate 160. Due to this characteristic structure, the fixing member 180 may completely cover the welded portion (see 162 of FIG. 7) of the current collector plate 160 and restrain welding foreign matters. In addition, the fixing member 180 may fix the second electrode tab 122_2 to the current collector plate 160.

According to one or more embodiments, the thickness h1 of a portion of the fixing member 180 arranged on the surface of the current collector plate 160 may be greater than the thickness h2 of a portion of the fixing member 180 arranged on the surface of the bent end of the second electrode tab 122_2.

According to one or more embodiments, the thickness h1 of a portion of the fixing member 180 arranged on the surface of the current collector plate 160 may be equal to the sum of the thickness h2 of a portion of the fixing member 180 arranged on the surface of the bent end of the second electrode tab 122_2 and the thickness h3 of the bent end of the second electrode tab 122_2.

According to one or more embodiments, the height of the fixing member 180 may be less than or equal to the upper surface of the protrusion portion 164 in the direction in which the protrusion portion 164 protrudes. Specifically, based on the Y-axis direction, the height of the uppermost end of the fixing member 180 may be lower than or equal to the upper surface of the protrusion portion 164.

According to one or more embodiments, the shape of the fixing member 180 may be set by considering the shape of the welded portion 162 of the current collector plate 160 and the bent end of the second electrode tab 122_2. The shape of the fixing member 180 may be various shapes such as a rectangular shape or a circular shape.

The size and shape of the fixing member 180 may be varied.

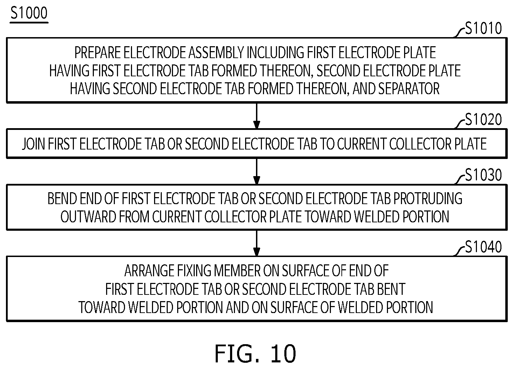

FIG. 10 illustrates a flowchart showing a method S1000 for manufacturing a secondary battery according to one or more embodiments of the present disclosure.

A method S1000 for manufacturing a secondary battery may be started by preparing an electrode assembly including a first electrode plate having a first electrode tab formed thereon, a second electrode plate having a second electrode tab formed thereon, and a separator (S1010).

The first electrode tab or the second electrode tab may be joined to a current collector plate (S1020).

According to one or more embodiments, the current collector plate may include a welded portion to which the first electrode tab or the second electrode tab is welded and a protrusion portion connected to the welded portion and protruding in a direction opposite to the direction in which the electrode assembly is positioned.

According to one or more embodiments, the step S1020 of joining the first electrode tab or the second electrode tab to the current collector plate may include joining the first electrode tab or the second electrode tab to the welded portion. The first electrode tab or the second electrode tab may be bent and pressed in opposite directions, and then the current collector plate may be positioned on the upper side of the first electrode tab or the second electrode tab and the welded portion may be welded using laser welding to electrically connect the first electrode tab or the second electrode tab to the current collector plate.

Thereafter, the end of the first electrode tab or the second electrode tab protruding outward from the current collector plate may be bent toward the welded portion of the current collector plate (S1030).

Finally, a fixing member may be arranged on the surface of the end of the first electrode tab or the second electrode tab bent toward the welded portion and on the surface of the welded portion (S1040).

According to one or more embodiments, the step S1040 of arranging the fixing member on the surface of the end of the first electrode tab or the second electrode tab bent toward the welded portion and the surface of the welded portion may include arranging the fixing member to cover at least a portion of the surface of the first electrode tab or the second electrode tab bent toward the welded portion and at least a portion of the surface of the welded portion.

According to one or more embodiments, the step S1040 of arranging the fixing member on the surface of the end of the first electrode tab or the second electrode tab bent toward the welded portion and the surface of the welded portion may include forming the fixing member by applying and then curing an organic solvent.

According to one or more embodiments, the step S1040 of arranging the fixing member on the surface of the end of the first electrode tab or the second electrode tab bent toward the welded portion and the surface of the welded portion may include forming the fixing member by applying a UV-curable paint and then irradiating UV to cure the UV-curable paint.

According to one or more embodiments, the step S1040 of arranging the fixing member on the surface of the end of the first electrode tab or the second electrode tab bent toward the welded portion and the surface of the welded portion may include forming the fixing member by applying an epoxy resin and then adding a hardener thereto.

As a comparative example of the present disclosure, it may be assumed that the end of the first electrode tab or the second electrode tab protruding outward from the current collector plate is bent toward the welded portion, a tape is attached to the surface of the end of the first electrode tab or the second electrode tab bent toward the welded portion and the surface of the welded portion, and then an insulating member is attached to the surface of the tape and the surface of the current collector plate. Compared to the comparative example, the example of the present disclosure may fix the electrode tabs to the current collector plate and insulate between the current collector plate and the case in a single process, thereby simplifying the manufacturing process of the secondary battery and reducing manufacturing time and manufacturing cost.

The flowchart of FIG. 10 and the above description are only examples of the present disclosure, and the scope of the present disclosure is wider than and includes the flowchart of FIG. 10 and the above description. For example, one or more steps in the flowchart and the above description may be added/changed/deleted, the order of one or more steps may be changed, and one or more steps may be performed simultaneously.

The electrodes and the electrode terminals of an electrode assembly may be electrically connected to each other through a current collector plate. The current collector plate may electrically connect the electrodes and the electrode terminals through contact with the electrode tabs. The current collector plate may be in contact with the electrode tab by welding. At this time, impurities such as welding foreign matters may be formed by welding, and these impurities may cause defects inside the secondary battery.

According to one or more embodiments of the present disclosure, where the electrode tab is joined to the current collector plate by welding, a secondary battery including a fixing member that restrains impurities such as welding foreign matters generated by welding may be provided.

According to one or more embodiments of the present disclosure, where the electrolyte is injected into the secondary battery, welding foreign matters move inside the secondary battery, thus lowering the voltage of the secondary battery. However, the fixing member may prevent defects in the secondary battery by restraining the welding foreign matters in advance.

According to one or more embodiments of the present disclosure, because the impact between the case and the current collector plate may be absorbed by the elasticity of the fixing member, deformation of the current collector plate due to the impact may be blocked in advance, thereby preventing damage to the electrode plate.

According to one or more embodiments of the present disclosure, because the electrode tab is fixed to the current collector plate and the fixing member capable of insulating between the current collector plate and the case and between the electrode tab and the case is arranged, the process for manufacturing the secondary battery may be simplified, thereby reducing the manufacturing time and manufacturing cost.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (10), comprising:
an electrode assembly (100) including a first electrode plate (110) having at least one first electrode tab (112) thereon, a second electrode plate (120) having at least one second electrode tab (122) thereon, and a separator (130) between the first electrode plate (110) and the second electrode plate (120);
a current collector plate (160) joined to the at least one first electrode tab (112) or the at least one second electrode tab (122); and
a fixing member (180) on a surface of the current collector plate (160), the fixing member (180) being connected to a portion of a surface of an end of the at least one first electrode tab (112) or the at least one second electrode tab (122).

2. The secondary battery (10) as claimed in claim 1, wherein the at least one first electrode tab (112) or the at least one second electrode tab (122) is joined to the current collector plate (160) by laser welding or ultrasonic welding.

3. The secondary battery (10) as claimed in claim 1 or 2, wherein the at least one first electrode tab (112) is a pair of first electrode tabs (112_1, 112_2) on one side of the electrode assembly (100), and the at least one second electrode tab (122) is a pair of second electrode tabs (122_1, 122_2) on the other side of the electrode assembly (100).

4. The secondary battery (10) as claimed in claim 1, 2 or 3, wherein the fixing member (180) comprises an insulating material.

5. The secondary battery (10) as claimed in any preceding claim, wherein the fixing member (180) comprises any one of an organic solvent, a UV-curable paint, and an epoxy resin.

6. The secondary battery (10) as claimed in any preceding claim, wherein the current collector plate (160) comprises:
a welded portion (162) where the at least one first electrode tab (112) or the at least one second electrode tab (122) is welded; and
a protrusion portion (164) connected to the welded portion (162), the protrusion portion (164) protruding in a direction opposite to a direction in which the electrode assembly (100) is positioned.

7. The secondary battery (10) as claimed in claim 6, wherein:
the at least one first electrode tab (112) or the at least one second electrode tab (122) protrudes outward from the current collector plate (160), and
the end of the at least one first electrode tab (112) or the at least one second electrode tab (122) is bent toward the welded portion (162) of the current collector plate (160), resulting in a bent end.

8. The secondary battery (10) as claimed in claim 7, wherein the fixing member (180) covers at least a portion of a surface of the bent end of the at least one first electrode tab (112) or the at least one second electrode tab (122) and at least a portion of a surface of the welded portion (162).

9. The secondary battery (10) as claimed in claim 7 or 8, wherein a length of the fixing member (180) is less than or equal to a length of the bent end of the at least one first electrode tab (112) or the at least one second electrode tab (122).

10. The secondary battery (10) as claimed in any preceding claim, wherein a width of the fixing member (180) is less than or equal to a width of the current collector plate (160).

11. The secondary battery (10) as claimed in any one of claims 7 to 10, wherein at least one of:
a thickness of a portion of the fixing member (180) on the surface of the current collector plate (160) is greater than a thickness of a portion of the fixing member (180) on the surface of the bent end of the at least one first electrode tab (112) or the at least one second electrode tab (122);
a height of the fixing member is lower than or equal to an upper surface of the protrusion portion in a direction in which the protrusion portion protrudes.

12. The secondary battery (10) as claimed in any one of claims 7 to 11, wherein a thickness of a portion of the fixing member (180) on the surface of the current collector plate (160) is equal to a sum of a thickness of a portion of the fixing member (180) arranged on the surface of the bent end of the at least one first electrode tab (112) or the at least one second electrode tab (122) and a thickness of the bent end of the at least one first electrode tab (112) or the at least one second electrode tab (122).

13. A method for manufacturing a secondary battery (10), the method comprising:
providing an electrode assembly (100) comprising a first electrode plate (110) having a first electrode tab (112) formed thereon, a second electrode plate (120) having a second electrode tab (122) formed thereon, and a separator(130);
joining the first electrode tab (112) or the second electrode tab (122) to a current collector plate (160);
bending an end of the first electrode tab (112) or the second electrode tab (122) protruding outward from the current collector plate (160) toward a welded portion (162) of the current collector plate (160); and
arranging a fixing member (180) on a surface of an end of the first electrode tab (112) or the second electrode tab (122), the fixing member (180) being bent toward the welded portion (162) and on a surface of the welded portion (162).

14. The method as claimed in claim 13, wherein the current collector plate (160) comprises:
a welded portion (162) where the first electrode tab (112) or the second electrode tab (122) is welded; and
a protrusion portion (164) connected to the welded portion (162), the protrusion portion (164) protruding in a direction opposite to a direction in which the electrode assembly (100) is positioned,
wherein joining of the first electrode tab (112) or the second electrode tab (122) to the current collector plate (160) comprises joining the first electrode tab (112) or the second electrode tab (122) to the welded portion (162).

15. The method as claimed in claim 13 or 14, wherein arranging the fixing member (180) comprises at least one of:
arranging the fixing member (180) to cover at least a portion of the surface of the first electrode tab (112) or the second electrode tab (122), the fixing member (180) being bent toward the welded portion (162) and at least a portion of the surface of the welded portion (162); and
forming the fixing member by one of:
applying and curing an organic solvent;
applying a UV-curable paint, irradiating UV thereon, and curing the UV-curable paint; or
applying an epoxy resin and adding a hardener thereto.
